## Europäisches Patentamt
## European Patent Office
## Office européen des brevets

(19)

(11) Veröffentlichungsnummer: **0 120 397**
**B1**

(12)

# EUROPÄISCHE PATENTSCHRIFT

(45) Veröffentlichungstag der Patentschrift:
04.01.89

(51) Int. Cl.⁴: **C 10 J  3/66, C 10 J  3/54**

(21) Anmeldenummer: **84102715.4**

(22) Anmeldetag: **13.03.84**

(54) **Einrichtung zur Gewinnung von Energie aus pyrolisierbaren, kohlenstoffhaltigen Abfallstoffen wechselnder Zusammensetzung.**

(30) Priorität: **23.03.83  DE 3310534**

(43) Veröffentlichungstag der Anmeldung:
**03.10.84 Patentblatt 84/40**

(45) Bekanntmachung des Hinweises auf die Patenterteilung:
**04.01.89 Patentblatt 89/1**

(84) Benannte Vertragsstaaten:
**AT BE CH FR GB IT LI LU NL SE**

(56) Entgegenhaltungen:
**DE-A-2 951 478**
**DE-A-3 004 111**
**FR-A-2 458 581**
**GB-A-2 068 014**

(73) Patentinhaber: **C. Deilmann AG, Hilgenstiege 82, D-4444 Bad Bentheim (DE)**

(72) Erfinder: **Grumpelt, Heinrich, Dr.- Ing. Dipl. Berging., Am Berghang 77, D-4444 Bad Bentheim (DE)**
Erfinder: **Jaroch, Johannes, Dipl.- Ing., Brennerei-Strasse 21, D-4444 Bad Bentheim (DE)**

(74) Vertreter: **Oidtmann, Paul Heinz, Patent- und Rechtsanwälte Dr.- Ing. Stuhlmann Dipl.- Ing. Willert Dr.- Ing. Oidtmann Dipl.- Ing. Bockermann Dipl.- Ing. Schneiders Bergstrasse 159, D-4630 Bochum 1 (DE)**

**Beschreibung**

Die Erfindung richtet sich auf eine Einrichtung zur Gewinnung von gasförmiger Energie aus pyrolisierbaren kohlenstoffhaltigen Stoffen gemäß den Merkmalen im Oberbegriff des Anspruchs 1.

Eine derartige Vorrichtung zählt durch die GB 2 068 014 A zum Stand der Technik.

Kernpunkt dieses Vorschlags ist die Verwendung von Kohle als Ausgangsstoff. Dabei soll es sich um eine backende Kohle handeln. Der Vorschlag stellt speziell darauf ab, ein Zwischenprodukt in Form einer künstlichen Kohle zu schaffen. Dieses Zwischenprodukt soll nicht mehr backend sein, um anschließend dessen Vergasung durchführen zu können.

Die Behandlung eines derartigen festen Brennstoffs in einem Drehrohrreaktor erfordert eine spezielle Vorbereitung in zwei Stufen.

Zunächst wird der Brennstoff nach Vorzerkleinerung in einer ersten Trocknungsstufe bei einer Temperatur von etwa 120°C getrocknet.

Dieser getrocknete Brennstoff wird anschließend in einer Vorerhitzungsstufe bei etwa 230°C aufgeheizt, um seine Oberflächen in einer oxidierenden Atmosphäre durch Anoxidation für die nachfolgende Pyrolyse in dem Drehrohrreaktor geeigneter zu machen.

Eine derartige Vorbereitung des Brennstoffs erfordert aber einen erheblichen Aufwand in Bezug auf die Bereitstellung von geeigneten Trocknungs- und Erhitzungsvorrichtungen, auf die Durchführung dieser zweistufigen Vorbehandlung der backen den Kohlen, auf die Schaffung von Rohrleitungen und Sicherheitseinrichtungen für die Zuführung und Abführung der Gase sowie hinsichtlich des Transports der jeweiligen Zwischenerzeugnisse von der einen Stufe zur anderen Stufe.

Außerdem ist mit dem Durchlauf des Brennstoffs durch die Vorbehandlungsstufen ein deutlich meßbarer Energieverbrauch verbunden, der dann bei dem zu erzeugenden Endprodukt fehlt.

Im Hinblick darauf, daß der vorbehandelte Brennstoff im Drehrohrreaktor nahezu vollständig von seinen teerigen Bestandteilen befreit werden soll, und zwar unter Sauerstoffabschluß, ist ferner die Bereitstellung einer ziemlich hohen Behandlungstemperatur erforderlich.

Die Behandlung des feinkörnigen Brennstoffs im Drehrohrreaktor kann zudem nur unter Verwendung eines Sekundärmediums durchgeführt werden, um einerseits die gewünschte Aufheizung und Pyrolyse durchführen zu können und gleichzeitig eine Koagulation des Brennstoffs während dessen Erweichung bei der Pyrolyse zu verhindern. Hierzu gelangen vorab erhitzte Festkörper, z. B. in Form von Keramikkugeln, zur Anwendung.

Diese Art der Beheizung ist mit einem zusätzlichen erheblichen Aufwand verbunden. Die Keramikkugeln müssen nämlich nach ihrem Einsatz grundsätzlich außerhalb des Drehrohrreaktors wieder auf die notwendige Temperatur gebracht und von anbackenden Kohle- und Teerbestandteilen freigebrannt werden, um eine einwandfreie Behandlung des Brennstoffs sicherstellen zu können. Eine indirekte Beheizung des Drehrohrreaktors ist im bekannten Fall deshalb nicht möglich, weil bei der Pyrolyse Teerdämpfe entstehen, die sich dann an den beheizten umfangsseitigen Flächen desselben absetzen, cracken und den Pyrolyseprozeß zumindest erheblich behindern würden.

Die Verwendung von Keramikkugeln ist mit dem weiteren Nachteil verbunden, daß zur Erzielung einer ausreichenden Behandlungstemperatur ein Verhältnis von etwa 2,8 : 1 von Keramikkugeln, zum Brennstoff erforderlich ist. Dies bedeutet bei einem noch wirtschaftlich zu betreibenden Drehrohrreaktor eine Verringerung des Brennstoffdurchsatzes pro Zeiteinheit. Nicht zu vergessen ist der Aufwand für die Wiederaufheizung der Keramikkugeln außerhalb des Drehrohrreaktors in der Aufheizvorrichtung, ihre Reinigung von anhaftenden Crackprodukten des Brennstoffs sowie für den Transport der Keramikkugeln vom Drehrohrreaktor zur Aufheizvorrichtung und von dieser zurück zum Drehrohrreaktor.

Die aus dem Drehrohrreaktor tretenden künstlichen Kohlen sind reaktionsträge. Mithin ist es erforderlich, in der anschließenden Vergasungsstufe vergleichsweise hohe Durchschnittstemperaturen bereitzustellen, die in der Regel deutlich über 1 000°C liegen. Es wäre zwar denkbar, auch auf geringere Temperaturen zu gehen, um vor allem die als Folge der hohen Prozeßtemperaturen unvermeidliche Schlackebildung durch Ascheschmelzpunktüberschreitung zu verhindern. Dies würde aber wiederum zusätzliche Katalysatoren erforderlich machen und damit den vorrichtungs- und verfahrenstechnischen Aufwand weiter erhöhen.

Darüber hinaus muß im bekannten Fall der Vergasungsprozeß unter Druck durchgeführt werden. Er kann also nicht atmosphärisch ablaufen. Auch dies ist wiederum mit einem zusätzlichen vorrichtungs- und verfahrenstechnischen Aufwand verbunden. Dieser macht sich insbesondere bei der Brennstoffeinführung und der durch die Aschenschlackebildung bedingten Problematik von deren Abführung bemerkbar. Eine Minderung dieses Aufwands ist unter anderem durch den Einsatz von Dampf oder Katalysatoren möglich. Da in diesem Fall indessen fast dreimal so viel Dampf wie Luftsauerstoff benötigt wird, ist nicht zu vermeiden, daß ein Teil der gewonnenen Energie für deren Erzeugung verlorengeht, was den Gesamtwirkungsgrad merklich herabsetzt. Schließlich wäre noch darauf hinzuweisen, daß bei der Überführung von Pyrolysegas und Restkondensate enthaltendem Vergasungsgas der Anfall des hochgiftigen Reaktionsprodukts Schwelwasser nicht vermieden werden kann, welches dann wiederum mit einem hohen vorrichtungs- und verfahrenstechnischen Aufwand beseitigt werden muß.

Der gattungsprägende Stand der Technik offenbart mithin eine vorrichtung mit einem vergleichsweise komplizierten Vergasungsprozeß, der allerdings für die Vergasung von insbesondere backenden Kohlen typisch ist.

Der Erfindung liegt die Aufgabe zugrunde, die im Oberbegriff des Anspruchs 1 beschriebene Einrichtung so weiterzubilden, daß bei geringerem vorrichtungstechnischem Aufwand auch kohlenstoffhaltige Abfallstoffe wechselnder Zusammensetzung und starker Inhomogenität mit befriedigendem Wirkungsgrad energetisch genutzt werden können, ohne daß bei der Einrichtung schwer zu handhabendes Pyrolyseöl anfällt.

Die Lösung dieser Aufgabe besteht nach der Erfindung in den im kennzeichnenden Teil des Anspruchs 1 aufgeführten Merkmalen.

Eine derartige Verknüpfung von Vorrichtungseinzelteilen zu einer Gesamteinrichtung gestattet es nunmehr, kohlenstoffhaltige Abfallstoffe wechselnder Zusammensetzung und Beschaffenheit lediglich in zwei Prozeßschritten zu teer- und kondensatfreien, trockenen, leicht handhabbaren motorgängigen Brenngasen (Klargasen) umzuwandeln.

Dazu werden die kohlenstoffhaltigen Stoffe wechselnder Zusammensetzung und starker Inhomogenität ohne wärmetechnische Vorbehandlung zunächst in einem Drehrohrreaktor getrocknet und verkokt. Der Drehrohrreaktor kann stufenweise sowie zonenweise beheizt werden. Bei dieser vorgehensweise wird eine gezielte Austreibung der ursprünglich enthaltenen Teere und flüchtigeen Bestandteile nur in dem Umfang vorgenommen, daß soviel Schwel-Gas erzeugt wird, wie es für einen autothermen Betrieb des Drehrohrreaktors benötigt wird. Eine besondere Vorbehandlung der Brennstoffe entfällt somit vollständig.

Ferner erlaubt es die erfindungsgemäße Einrichtung, gerade nur soviel Teer und kondensierbare Bestandteile aus dem Rohmaterial auszutreiben, daß bei der anschließenden Vergasung des Pyrolysekokses einerseits im Brenngas keine kondensierbaren Bestandteile mehr auftreten, aber im Pyrolysekoks gleichzeitig noch so viel wie möglich an flüchtigen Bestandteilen enthalten bleibt, daß andererseits bei dessen vollständiger Umsetzung in Brenngas die maximal mögliche Brenngasausbeute - bezogen auf das eingesetzte Rohmaterial - erzielt wird.

Durch die Verknüpfung des ohne ein Sekundärmedium arbeitenden Vergasers über eine Verßaserdosiereinrichtung mit dem Drehrohrreaktor kann in einem zweiten Prozeßschritt aufgrund des im Drehrohrreaktors erzeugten porösen oberflächenreichen und leicht vergasbaren Pyrolysekokses (Semikoks) dieser im Vergaser mit sauerstoffhaltigen Vergasungsmitteln bei Temperaturen zwischen 400° C und 1 000° C vollständig zu einem teer- und kondensatorfreien Brenngas umgesetzt werden. Ein solcher Koks ist wesentlich reaktionsfreudiger als in Drehrohrreaktoren erzeugte künstliche Kohlen aus fossilen Brennstoffen.

Da der bevorzugt als Fließbett- oder Wirbelschichtvergaser ausgebildete Vergaser verfahrensgemäß immer mit einem in der Beschaffenheit gleichbleibenden Pyrolysekoks beschickt wird, brauchen aus dem anfallenden Brenngas lediglich die trockenen inerten Bestandteile der Asche entfernt zu werden. Das hat in besonders vorteilhafter Weise zur Folge, daß nach der Erfindung dem Vergaser eine Heißgasentstaubung nachgeschaltet werden kann, die außer der Entstaubung keine anderen Reinigungsaufgaben mehr wahrzunehmen braucht. Dabei wird die Heißgasentstaubung unter Aufrechterhaltung des ursprünglichen Brenngas-Temperaturniveaus gewährleistet. Aufwendige Gaskühl- und/oder Kondensationseinrichtungen entfallen. Auch Gas-Wascheinrichtungen sind entbehrlich.

Das erzeugte Brenngas kann ohne weiteres in Verbrennungskraftmaschinen mit nachgeschalteten Generatoren zur Erzeugung elektrischer Energie und/oder ohne Kühlung in Kesselanlagen zur Erzeugung von Heiz- und/oder Prozeßwärme eingesetzt werden. Dabei ist es von besonderem Vorteil, daß die das Brenngas zu der Verbrennungsvorrichtung überführenden Leitungen wärmeisoliert sind, so daß die Gastemperaturen auf einem Niveau gehalten werden können.

Durch die Beheizbarkeit der Brenngasleitung gemäß den Merkmalen des Anspruchs 2 wird auf jeden Fall sichergestellt. daß das Brenngas auf dem Wege zu der Verbrennungsvorrichtung nicht unter 200° C abkühlen kann.

Durch die Anbindung der Schwelgasentstaubung an das Beschickungsende des Drehrohrreaktors kann entsprechend den Merkmalen des Anspruchs 3 sichergestellt werden, daß auch das dort entstehende Schwelgas gereinigt wird. Die Verbindung zwischen dem Beschickungsende des Drehrohrreaktors und der Schwelgasentstaubung ist bevorzugt wärmeisoliert.

In Abhängigkeit von den zu vergasenden Abfallstoffen im Rohstoffbunker ist es gemäß den Merkmalen des Anspruchs 4 von Vorteil, ein auf die Art und den Zustand dieser Abfallstoffe einstellbares Fördersystem zwischen dem Rohstoffbunker und dem Drehrohrreaktor vorzusehen.

Die gasdichte Schleuse entsprechend Anspruch 5 dient vor allem der Betriebssicherheit.

Auch die Merkmale des Anspruchs 6 unterstützen die Betriebssicherheit der erfindungsgemäßen Einrichtung. Außerdem dient die Vergaserdosieranordnung zum Sammeln und Verteilen von z. B. kleinstückig gesiebtem Rohstoff aus dem Rohstoffbunker, gegebenenfalls gebrochenem Pyrolysekoks aus dem Drehrohrreaktor bzw. Pyrolysekoksstaub aus der Schwelgasentstaubung sowie restkohlenstoffhaltige Asche aus der Brenngasentstaubung.

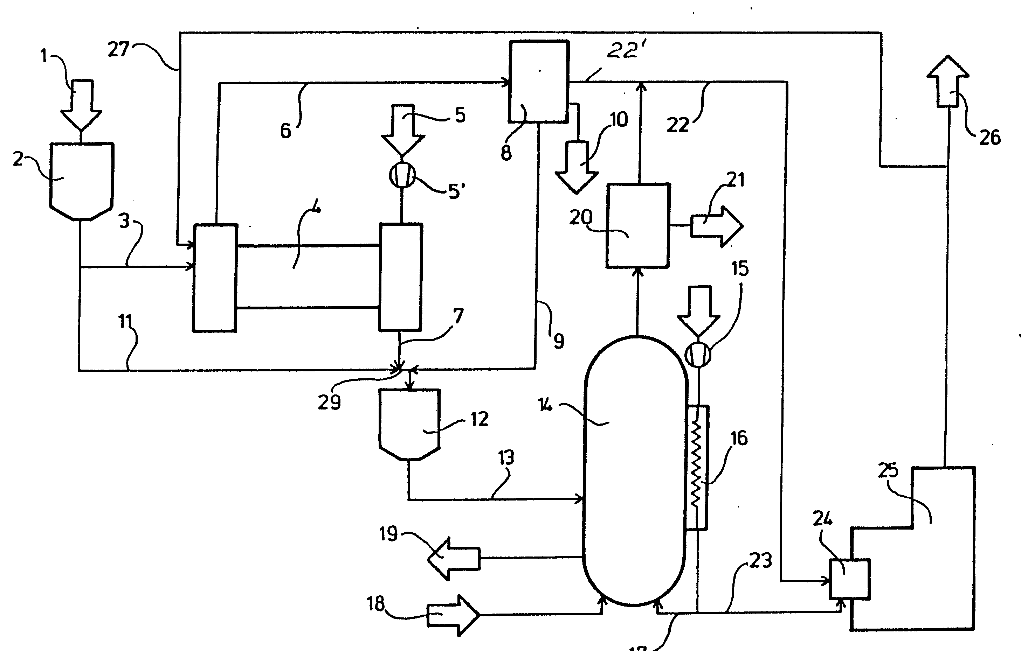

Die Erfindung ist nachfolgend anhand eines in der Zeichnung dargestellten Ausführungsbeispiels näher erläutert.

Mit 1 ist eine Rohstoffeingabe bezeichnet, über die in üblicher Weise ein Rohstoffbunker 2 unmittelbar aus Transportfahrzeugen befüllt werden kann. Als Rohstoffe kommen zum Einsatz: Industrieabfälle, beispielsweise beladener Bleicherde mit Holz, Pappen, Papier, Kunststoffen und Kantinenmüll, Hausmüll (Sommer- oder Wintermüll), Altreifen, bei der Schrottverwertung anfallender Sperrmüll und dergleichen.

Der Rohstoffbunker 2 ist durch einen stufenlos regelbaren Förderer 3 mit dem Drehrohrreaktor 4 gekoppelt. Über eine nicht näher dargestellte, zwischen dem Förderer 3 und dem Drehrohrreaktor 4 vorgesehene gasdichte Schleuse werden die Rohstoffe in den Drehrohrreaktor 4 eingebracht.

Über eine Luftzufuhr 5 mit einem regelbaren Gebläse 5' wird Luft als Vergasungsmittel dem Drehrohrreaktor 4 zugeführt. Der Drehrohrreaktor 4 kann gesondert beheizt sein. Erforderlich ist eine solche Heizung jedoch nicht grundsätzlich.

Das durch Teilverbrennung und Pyrolyse im Drehrohrreaktor entstehende Heißgas (Schwelgas) hat eine Temperatur von üblicherweise zwischen 400° und 500° C, jedenfalls über 200° C und einen Heizwert zwischen 1 000 und 3 000 kcalNm³. Über eine am Beschickungsende des Drehrohrreaktors 4 beginnende wärmeisolierte Abzugsleitung 6 wird das Heißgas unter Aufrechterhaltung einer Temperatur oberhalb 200° C einer Heißgasentstaubung 8 zugeführt. Die Heißgasentstaubung 8 besteht aus mindestens einem Zyklon-Staubabscheider oder einem entsprechenden Gasreinigungsaggregat, wie Filter oder dergleichen. Aus diesem wird die feine Asche über einen Ascheabzug 10 abgezogen bzw. werden kohlenstoffhaltige Stäube über eine Förderleitung 9, die gegebenenfalls mit einer Kühlvorrichtung versehen sein kann, einem Sammel- und Verknüpfungspunkt 29 zugeführt.

Das vom Staub bzw. Koks befreite Brenngas gelangt über eine Zwischenleitung 22' zu einer wärmeisolierten Brenngasleitung 22. Diese gegebenenfalls sogar beheizbare Brenngasleitung 22 stellt sicher, daß das Brenngas auf dem Wege zu einer Verbrennungsvorrichtung 25 nicht unter 200° C abkühlen und die mit der Leitung 21 abgeführte restkohlenstoffhaltige Asche auch in den Vergasungsreaktor 14 über den Verknüpfungspunkt 29 zurückgeführt werden können.

Die Verbrennungsvorrichtung 25 bildet Bestandteil einer Kesselanlage. Sie besitzt einen Brenner 24, der auch als Kombinationsbrenner für andere Brennstoffe ausgebildet sein kann.

Die Abgase der Verbrennungsvorrichtung 25 werden über einen Rauchgasabzug 26 abgeführt. Zwischen dem Rauchgasabzug 26 und dem Beschickungsende des Drehrohrreaktors 4 ist eine Rauchgasrückführungsleitung 27 vorgesehen, die zu einer weiteren Energie-Rekuperation verwendet werden kann. Die Rauchgase können zur Erwärmung des Inneren des Drehrohrreaktors 4 eingesetzt werden.

Über einen Pyrolysekoksabzug 7, der auch als Ascheabzug verwendet werden kann, wird dem Sammel- und Verknüpfungspunkt 29 der im Drehrohrreaktor 4 entstehende Pyrolysekoks zugeführt.

Ferner ist an den Sammel- und Verknüpfungspunkt 29 eine Rohstoffleitung 11 angeschlossen.

Die im Sammel- und Verknüpfungspunkt 29 zusammenlaufenden Leitungen 7, 9, 11 enden in einer Vergaserdosieranordnung 12, beispielsweise einem Dosierbunker. In diesem sammelt sich kleinstückig gesiebter Rohstoff aus dem Rohstoffbunker 2, gegebenenfalls gebrochener Pyrolysekoks aus dem Drehrohrreaktor 4 und Pyrolysekoksstaub aus der Heißgasentstaubung 8 und gegebenenfalls restkohlenstoffhaltige Asche aus der Heißgasentstaubung 20.

Das aus der Vergaserdosieranordnung 12 abgezogene Gemisch wird über eine gasdichte Eintragseinrichtung 13 mit einem vergaser 14 verbunden, der als Wirbelschicht-Vergaser ausgebildet ist.

Dem Vergaser 14 wird über eine Leitung 18 ein Vergasungsmittel zugeführt. Ein Ascheabzug 19 ist ebenfalls vorgesehen.

Das bei einer Temperatur zwischen 400° C bis 1 000° C den Vergaser 14 verlassende Brenngas wird auf gleichbleibendem Temperaturniveau über eine Heißgasentstaubung 20 von Staub befreit. Anschließend wird es der Brenngasleitung 22 zugeführt, in der es sich gegebenenfalls mit dem Heißgas aus dem Drehrohrreaktor 4 vermischt.

Der Verbrennungsvorrichtung 25 mit Brenner 24 und/oder dem Vergaser 14 kann Luft zugeleitet werden, die über einen Vorwärmetauscher 16 geführt ist. Die Luft wird über ein Gebläse 15 durch den Vorwärmetauscher 16 eingedrückt.

**Patentansprüche**

1. Einrichtung zur Gewinnung von gasförmiger Energie aus pyrolysierbaren kohlenstoffhaltigen Stoffen, die einen mit den Stoffen beschickbaren Schwelgas sowie Pyrolysekoks erzeugenden Drehrohrreaktor und einen dem Drehrohrreaktor nachgeschalteten Vergaser umfaßt, der mit einem sauerstoffhaltigen Vergasungsmittel beaufschlagbar ist und Mittel zum Abführen von Heißgas sowie inerter Asche aufweist, <u>dadurch gekennzeichnet</u>, daß zwischen den aus einem Rohstoffbunker (2) direkt mit kohlenstoffhaltigen Stoffen wechselnder Zusammensetzung und starker Inhomogenität beschickbaren autotherm betriebenen Drehrohrreaktor (4) und den ohne ein Sekundärmedium arbeitenden Vergaser (14) eine Vergaserdosieranordnung (12) eingegliedert ist die mit dem Drehrohrreaktor (4), dem Rohstoffbunker (2) und einer Schwelgasentstaubung (8) leitungsverknüpf ist, wobei der Vergaser (14) über eine Heißgasentstaubung (20) sowie eine das in dem Vergaser (14) entstehende Brenngas mit einer Temperatur zwischen 400°C und 1000°C überführende wärmeisolierte Leitung (22) mit einem einer Verbrennungsvorrichtung (25) zugeordneten Brenner (24) verbunden ist.

2. Einrichtung nach Anspruch 1, <u>dadurch gekenzeichnet</u>, daß die Brenngasleitung (22) beheizbar ist.

3. Einrichtung nach Anspruch 1, <u>dadurch gekennzeichnet</u>, daß die Schwelgasentstaubung (8) sowohl mit dem Beschickungsende des Drehrohrreaktors (4) als auch mit der Brenngasleitung (22) leitungsverbunden ist.

4. Einrichtung nach Anspruch 1, <u>dadurch gekennzeichnet</u>, daß der Rohstoffbunker (2) durch einen stufenlos regelbaren Förderer (3) mit dem Drehrohrreaktor (4) gekoppelt ist.

5. Einrichtung nach Anspruch 4, <u>dadurch gekennzeichnet</u>, daß zwischen dem Drehrohrreaktor (4) und dem Förderer (3) eine gasdichte Schleuse vorgesehen ist.

6. Einrichtung nach Anspruch 1, <u>dadurch gekennzeichnet</u>, daß die Vergaserdosieranordnung (12) durch eine Eintragseinrichtung (13) mit dem Vergaser (14) gasdicht verbunden ist.

## Claims

1. A system for producing energy in gas form from pyrolizable carbonaceous substances, the system comprising: a cylindrical rotary reactor chargeable with the substances and producing carbonization gas and pyrolysis coke; and a gasifier disposed after such reactor, the gasifier being adapted to be supplied with an oxygen-containing gasification agent and having means for removing hot gas and inert ash, characterised in that a gasifier dispensing arrangement (12) is provided between, on the one hand, the autothermically operated reactor adapted to be charged directly from a raw material bunker (2) with carbonaceous substances of varying composition and considerable inhomogeneity and, on the other hand, the gasifier (14), the same operating without a secondary medium, and is connected by way of lines to the reactor (4), raw material bunker (2) and carbonization gas dust removal means (8), the gasifier (14) communicating with a burner (24) associated with a combustion facility (25) by way of a hot gas dust removal facility (20) and a heat-insulated line (22), the same conveying the combustible gas arising in the gasifier (14) at a temperature between 400°C and 1000°C.

2. A system according to claim 1, characterised in that the combustible-gas line (22) is heatable.

3. A system according to claim 1, characterised in that the carbonization gas dust removal means (8) are connected by lines to the charging end of the reactor (4) and to the combustible-gas line (22).

4. A system according to claim 1, characterised in that the raw material bunker (2) is coupled to the reactor (4) by a steplessly adjustable conveyor (3).

5. A system according to claim 4, characterised in that a gas-tight lock is present between the reactor (4) and conveyor (3).

6. A system according to claim 1, characterised in that the gasifier dispensing arrangement (12) is connected in gas-tight manner to the gasifier (14) by way of charging facility (13).

## Revendications

1. Dispositif destiné à la récupération d'énergie gazeuse à partir de substances carbonées pyrolysables, qui comporte un réacteur tubulaire tournant produisant un gaz de distillation à basse température chargeable avec les matières ainsi qu'un coke de pyrolyse et un gazéificateur monté en aval du réacteur tubulaire tournant, gazéificateur pouvant être alimenté par un agent de gazéification contenant de l'oxygène et présente des moyens destinés à l'évacuation des gaz chauds ainsi que de la cendre inerte, caractérisé en ce qu'entre le réacteur tubulaire tournant (4) actionné de façon autothermique et pouvant être alimenté directement en substances carbonées de composition variable et d'homogénéité importante et le gazéificateur (14) fonctionnant sans fluide secondaire, il est intercalé un agencement de dosage (12) du gazéificateur, lequel agencement est relié par des conduites au réacteur tubulaire tournant (4), à la trémie de matière première (2) et à un dépoussiéreur du gaz de distillation à basse température (8), le gazéificateur (14) étant relié via un dépoussiéreur de gaz chauds (20) ainsi que par une conduite (22) calorifugée amenant le gaz de combustion dans le gazéificateur (14) à une température entre 400°C et 1000°C, à un brûleur (24) affecté à un dispositif de combustion (25).

2. Dispositif selon la revendication 1, caractérisé en ce que la conduite des gaz de combustion (22) peut être chauffée.

3. Dispositif selon la revendication 1, caractérisé en ce que le dépoussiéreur du gaz de distillation à basse température (8) est relié par conduite aussi bien à l'extrémité d'alimentation du réacteur tubulaire tournant (4) qu'à la conduite de gaz de combustion (22).

4. Dispositif selon la revendication 1, caractérisé en ce que la trémie des matières premières (2) est accouplée au réacteur tubulaire tournant (4) par un convoyeur (3) réglable en continu.

5. Dispositif selon la revendication 4, caractérisé en ce qu'entre le réacteur tubulaire tournant (4) et le convoyeur (3) est prévu un sas étanche au gaz.

6. Dispositif selon la revendication 1, caractérisé en ce que l'agencement de dosage du gazéificateur (12) est relié de façon étanche au gaz au gazéificateur (14) via un dispositif d'admission (13).